# EUROPÄISCHE PATENTSCHRIFT

(11) **EP 3 638 703 B1**
(45) Veröffentlichungstag und Bekanntmachung des Hinweises auf die Patenterteilung: **28.10.2020**
(21) Anmeldenummer: 17755089.4
(22) Anmeldetag: 07.08.2017
(51) Int. Cl.: C08F 214/06, C09D 127/06

(54) **COPOLYMERISATE VON VINYLCHLORID, VINYLACETAT UND LANGKETTIGEN VINYLESTERN**
COPOLYMERS OF VINYL CHLORIDE, VINYL ACETATE AND LONG-CHAIN VINYL ESTERS
COPOLYMERES DE CHLORURE DE VINYLE, D'ACETATE DE VINYLE ET D'ESTERS DE VINYLE A CHAINE LONGUE

(43) Veröffentlichungstag der Anmeldung: 22.04.2020
(73) Patentinhaber: Wacker Chemie AG, 81737 München (DE); Vinnolit GmbH & Co. KG, 85737 Ismaning (DE)
(72) Erfinder: LAUTER, Ulrich, 84489 Burghausen (DE); BAUEREGGER, Stefan, 83352 Altenmarkt (DE)
(74) Vertreter: Schuderer, Michael
(86) Internationale Anmeldenummer: PCT/EP2017/069948
(87) Internationale Veröffentlichungsnummer: WO 2019/029787

(56) Entgegenhaltungen:
- DE-B1- 1 745 555
- JP-A- 2000 198 821
- JP-A- 2001 049 224
- Wacker Chemie Ag: "Vinnol H30/48M", , 12. Februar 2015 (2015-02-12), XP055448672, Gefunden im Internet: URL:http://sdb.wacker.com/pf/e/result/repo rt.jsp?P_LANGU=E&P_SYS=2&P_SSN=1638&P_REP= 00000000000000000002&P_RES=2568&P_SPEC=R [gefunden am 2018-02-07]

## Beschreibung

Die Erfindung betrifft Copolymerisate von Vinylchlorid, Vinylacetat und einem oder mehreren langkettigen Vinylestern von unverzweigten oder verzweigten Alkylcarbonsäuren mit 3 bis 18 C-Atomen, deren Herstellung mittels freier radikalischer Polymerisation und die Verwendung der damit erhaltenen Copolymerisate.

Copolymerisate von Vinylchlorid und Vinylestern sind aus dem Stand der Technik bekannt und werden in vielerlei Anwendungen eingesetzt: Als Bindemittel für Lacke und Druckfarben; zur Imprägnierung und Beschichtung von Papier, Pappe, Textilien, Vliesstoffen, Metallen, mineralische Oberflächen, Holz und Kunststoffen; als Beschichtungsmittel zur Herstellung von heißsiegelfähigen und HF-schweißbaren Filmen.

Die DE 1 745 555 AS betrifft ein Verfahren zur Herstellung von wässrigen Dispersionen von Mischpolymerisaten von Vinylchlorid, Vinylacetat und langkettigem Vinylester. Zur Verbesserung der Stabilität der wässrigen Dispersionen und der mit diesen Mischpolymerisaten erhaltenen Polymerfilme wird vorgeschlagen bei der Herstellung ein ternäres Dispergiermittel-Gemisch aus Schutzkolloid, anionischem Emulgator und nichtionischem Emulgator einzusetzen. In der DE 1 745 563 OS wird zur Herstellung solcher Mischpolymerisate ein ternäres Dispergiermittel-Gemisch aus Polyvinylpyrrolidon, Hydroxyalkylcellulose und nichtionischem Emulgator empfohlen.

In der DE 2 206 593 OS wird zur Verbesserung der Eigenschaften von Vinylchlorid-Vinylacetat-Mischpolymerisaten ebenfalls ein spezielles Dispergiermittel empfohlen, nämlich Celluloseether in Kombination mit Estern oder Ketonen. Die DE 2 409 800 OS beschreibt die Verbesserung der Metallhaftung bei Vinylchlorid-Vinylacetat-Copolymeren mittels Copolymerisation von ungesättigten Carbonsäuren.

Gegenstand der DE 2 364 057 OS ist die Verbesserung der Löslichkeit und der Thermostabilität von Massepolymerisaten aus Vinylchlorid und Maleinsäureanhydrid mittels Copolymerisation eines Vinylesters wie beispielsweise Vinylacetat. In der EP 0 177 956 A2 wird die Verbesserung der Verarbeitbarkeit von Vinylchlorid-Polymerisaten mittels Copolymerisation von langkettigen Vinylestern beschrieben, wobei zur Absenkung der Schmelzvikosität der Vinylester copolymerisiert wird, und das Molekulargewicht mittels Mercaptan-Regler abgesenkt wird. Aus der EP 0 391 398 A1 ist bekannt, dass die thermische Stabilität von Vinylchlorid-Vinylacetat-Copolymeren durch Austausch des Vinylacetats mit Versaticsäure-Vinylester verbessert wird.

Das Patent EP 1 599 515 B1 beschreibt die Herstellung thermostabiler Vinylchlorid-Copolymerisate mittels Copolymerisation mit epoxidhaltigen Comonomeren und in Gegenwart von Hydroxycarbonsäuren. Die XP055448672 offenbart ein Copolymerisat von Vinylchlorid, Vinylacetate und Dicarbonsäure (Fumarsäure) und die Verwendung des Copolymerisats in Lack- und Druckfarbenformulierungen sowie Heißsiegellacken.

Die derzeit erhältlichen Vinylchlorid-Vinylacetat-Copolymere zeigen bei deren Verarbeitung eine unbefriedigende Löslichkeit in Lösungsmitteln geringerer Polarität wie Aromaten, Glykolester oder Glykolether. Darüber hinaus ist eine Verbesserung der Haftung auf Metalloberflächen, beispielsweise Aluminium, oder Kunststoffoberflächen wünschenswert. Die Wasserbeständigkeit von Beschichtungen und die Siegelnahtfestigkeit von Verbundmaterialien, welche mit den derzeit verfügbaren Vinylchlorid-Vinylacetat-Copolymeren erhalten werden, sind ebenfalls verbesserungsbedürftig.

Gegenstand der Erfindung sind Copolymerisate von Vinylchlorid, Vinylacetat und einem oder mehreren langkettigen Vinylestern von unverzweigten oder verzweigten Alkylcarbonsäuren mit 3 bis 18 C-Atomen, dadurch gekennzeichnet, dass 35 bis 75 Gew.-% Vinylchlorid-Monomereinheiten, 5 bis 25 Gew.-% Vinylacetat-Monomereinheiten und 10 bis 55 Gew.-% Monomereinheiten von langkettigen Vinylestern enthalten sind, wobei sich die Angaben in Gew.-% auf das Gesamtgewicht der Comonomere beziehen, und sich die Angaben in Gew.-% jeweils auf 100 Gew.-% aufaddieren.

Bevorzugt werden Copolymerisate mit 55 bis 75 Gew.-% Vinylchlorid-Monomereinheiten, 5 bis 25 Gew.-% Vinylacetat-Monomereinheiten und 10 bis 30 Gew.-% Vinyllaurat. Als langkettige Vinylester von unverzweigten oder verzweigten Alkylcarbonsäuren mit 3 bis 18 C-Atomen bevorzugt sind Vinylpropionat, Vinylbutyrat, Vinyl-2-ethylhexanoat, Vinyllaurat, 1-Methylvinylacetat und Vinylester von α-verzweigten Monocarbonsäuren mit 5 bis 13 C-Atomen, beispielsweise Vinylpivalat, Veo-Va9^{R}, VeoVa10^{R} oder VeoVa11^{R} (Handelsnamen der Firma Hexion). Besonders bevorzugt sind Vinyllaurat (Handelsname der Firma Wacker Chemie ist Versa^{R} 12) und Vinylester von α-verzweigten Monocarbonsäuren mit 9 bis 10 C-Atomen (VeoVa9^{R} und VeoVa10^{R}). Am meisten bevorzugt ist Vinyllaurat (Vinyldodecanoat).

Gegebenenfalls können noch bis zu 10 Gew.-%, vorzugsweise 0,1 bis 10 Gew.-%, besonders bevorzugt 0,1 bis 2,0 Gew.-% funktionelle Comonomere copolymerisiert werden. Beispiele für funktionelle Comonomere sind ethylenisch ungesättigte Mono- und Dicarbonsäuren, vorzugsweise Acrylsäure, Methacrylsäure, Fumarsäure, Itaconsäure, Crotonsäure und Maleinsäure sowie Maleinsäureanhydrid; ethylenisch ungesättigte Carbonsäureamide und -nitrile, vorzugsweise Acrylamid und Acrylnitril; ethylenisch ungesättigte Sulfonsäuren bzw. deren Salze, vorzugsweise Vinylsulfonsäure, 2-Acrylamido-2-methyl-propansulfonsäure; epoxidhaltige Comonomere wie Glycidylmethacrylat, Glycidylacrylat, Allylglycidether, Vinylglycidether, vorzugsweise Glycidylmethacrylat.

Die Angaben in Gew.-% sind dabei auf das Gesamtgewicht der Comonomere bezogen, und addieren sich jeweils zu 100 Gew.-% auf.

Die Herstellung der Copolymerisate erfolgt mittels radikalisch initiierter Polymerisation in Masse, oder in nichtwässrigen Lösungsmitteln, oder in wässrigem Medium mittels Suspensionspolymerisation, Emulsionspolymerisation, Mikrosuspensionspolymerisation oder Miniemulsionspolymerisation. Bei der Lösungspolymerisation werden organische Lösungsmittel wie Ethylacetat oder Aceton eingesetzt. Bevorzugt werden die Polymerisationsverfahren in wässrigem Medium, und besonders bevorzugt werden Suspensionspolymerisation und Emulsionspolymerisation. Die Polymerisationstemperatur beträgt im Allgemeinen 20°C bis 85°C. Die Initiierung der Polymerisation kann mit den für das jeweilige Polymerisationsverfahren gebräuchlichen wasserlöslichen oder monomerlöslichen Initiatoren oder Redox-Initiator-Kombinationen erfolgen. Diese sind dem Fachmann bekannt. Diese Initiatoren werden im allgemeinen in einer Menge von 0,01 bis 1,0 Gew.-%, bevorzugt 0,1 bis 0,5 Gew.-%, jeweils bezogen auf das Gesamtgewicht der Comonomere, eingesetzt.

Bei den als besonders bevorzugt genannten Verfahren der Suspensions- und Emulsionspolymerisation wird in Wasser in Gegenwart von oberflächenaktiven Substanzen wie Schutzkolloiden und/oder Emulgatoren polymerisiert. Geeignete Schutzkolloide sind beispielsweise teilverseifte und vollverseifte Polyvinylalkohole, Cellulosen und deren Carboxymethyl-, Methyl-, Hydroxyethyl-, Hydroxypropyl-Derivate, Stärke und Stärkederivate, Copolymerisate von Alkyl(meth)acrylaten und OH-Alkyl(meth)acrylaten. Bevorzugte Polyvinylalkohole sind teilverseifte Polyvinylalkohole mit einem Hydrolysegrad von 70 bis 95 Mol-% und einer Höpplerviskosität, in 4 %-iger wässriger Lösung von 1 bis 30 mPas (Methode nach Höppler bei 20°C, DIN 53015). Bevorzugte Celluloseether sind Hydroxypropylmethylcellulosen. Bevorzugt wird kein Polyvinylpyrrolidon eingesetzt. Geeignete Emulgatoren sind sowohl anionische, kationische als auch nichtionische Emulgatoren, beispielsweise anionische Tenside wie Alkylsulfate mit einer Kettenlänge von 8 bis 18 C-Atomen, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten. Im Allgemeinen werden von 0,05 bis 5 Gew.-% Schutzkolloide und/oder Emulgatoren eingesetzt, bezogen auf das Gesamtgewicht der Comonomere.

Zur Steuerung des Molekulargewichts können während der Polymerisation regelnde Substanzen eingesetzt werden. Falls Regler eingesetzt werden, werden diese üblicherweise in Mengen zwischen 0,02 bis 10,0 Gew.-%, bezogen auf die zu polymerisierenden Monomeren, eingesetzt und separat oder auch vorgemischt mit Reaktionskomponenten dosiert. Beispiele solcher Substanzen sind halogenierte Alkane und halogenierte Alkene wie Tetrachlorkohlenstoff, Chloroform, Methylchlorid, Trichlorethylen sowie Aldehyde wie Acetaldehyd, Propionaldehyd, Butyraldehyd und Isobutyraldehyd. Geeignet sind auch Mercaptane. Bevorzugt wird Propionaldehyd.

Die Monomere können insgesamt zudosiert werden oder in Anteilen vorgelegt werden und der Rest nach der Initiierung der Polymerisation zudosiert werden. Die Dosierungen können separat (räumlich und zeitlich) durchgeführt werden. Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Das Copolymerisat kann aus einer wässrigen Dispersion oder einer nichtwässrigen Lösung mittels üblicher Verfahren, beispielsweise durch Ausfällen, Filtrieren und anschließender Trocknung, oder mittels Dekantieren und anschließender Trocknung, in Form des Festharzes isoliert werden. Die Trocknung kann in dem Fachmann bekannter Weise beispielsweise in einem Trommeltrockner, in einem Strömungsrohr, im Fließbett, oder in einem Zyklontrockner erfolgen.

Die Copolymerisate eignen sich als Bindemittel für Lacke und Druckfarben; als Bindemittel in Beschichtungsmitteln zur Imprägnierung und Beschichtung von Papier, Pappe, Textilien, Vliesstoffen, Metallen, mineralische Oberflächen, Holz und Kunststoffen; als Beschichtungsmittel zur Herstellung von heißsiegelfähigen und HF-schweißbaren Filmen.

Hervorzuheben ist, dass sich die Copolymerisate nicht nur in den häufig als Lösungsmittel eingesetzten Ketonen und Estern lösen, sondern selbst bei Raumtemperatur (23°C) auch in für Vinylchlorid-Vinylacetat-Mischpolymerisaten wenig geeigneten Lösungsmitteln wie Aromaten, Glykolester oder Glykolether ohne Erhitzen leicht löslich sind. Hervorzuheben sind ferner die verbesserte Mischbarkeit mit anderen Bindemitteln geringerer Polarität sowie die verbesserte Haftung auf Substraten geringerer Polarität.

Die nachfolgenden Beispiele dienen der weiteren Erläuterung der Erfindung.

Herstellung der Copolymerisate:

### Vergleichsbeispiel 1:

In einem 40 L Autoklaven wurden 12,5 kg Wasser und 17,5 g Dilauroylperoxid vorgelegt. Nach der Inertisierung des Autoklaven mit Stickstoff wurden 1,25 kg Vinylchlorid und 0,93 kg Vinylacetat in den Autoklaven gegeben und die Mischung für 30 min gerührt. Zur Stabilisierung der Tröpfchen wurden 1,93 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 74°C erhitzt und dann die Dosierung eines Gemisches aus 10,3 kg Vinylchlorid und 1,3 kg Vinylacetat bei konstantem Druck gestartet. Die Polymerisation wurde bei Erreichen eines Enddrucks von 4,0 bar beendet. Nach der Aufarbeitung der Suspension (Entgasung, Waschung und Trocknung) wurde ein weißes Pulver isoliert.

### Vergleichsbeispiel 2:

In einem 40 L Autoklaven wurden 15,4 kg Wasser und 16,2 g Dilauroylperoxid vorgelegt. Nach der Inertisierung des Autoklaven mit Stickstoff wurden 8,24 kg Vinylchlorid und 5,30 kg Vinylacetat in den Autoklaven gegeben und die Mischung für 20 min gerührt. Zur Stabilisierung der Tröpfchen wurden 1,34 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 71°C erhitzt. Die Polymerisation wurde bei Erreichen eines Enddrucks von 0,5 bar beendet. Nach der Aufarbeitung der Suspension (Entgasung, Waschung und Trocknung) wurde ein weißes Pulver isoliert.

### Beispiel 1:

In einem 40 L Autoklaven wurden 15,7 kg Wasser und 38,3 g Dilauroylperoxid vorgelegt. Nach der Inertisierung des Autoklaven mit Stickstoff wurden 4,25 kg Vinylchlorid, 3,54 kg Vinylacetat, 0,7 kg Vinyllaurat und 14,2 g Propanal in den Autoklaven gegeben und die Mischung für 20 min gerührt. Zur Stabilisierung der Tröpfchen wurden 1,39 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 71°C erhitzt und dann die Dosierung von 5,7 kg Vinylchlorid bei konstantem Druck gestartet. Die Polymerisation wurde bei einem Druckabfall von 3,5 bar im Vergleich zum Anfangsdruck beendet. Nach der Aufarbeitung der Suspension (Entgasung, Waschung und Trocknung) wurde ein weißes Pulver isoliert.

### Beispiel 2:

In einem 40 L Autoklaven wurden 15,7 kg Wasser und 28,4 g Dilauroylperoxid vorgelegt. Nach der Inertisierung des Autoklaven mit Stickstoff wurden 4,96 kg Vinylchlorid, 2,13 kg Vinylacetat und 1,40 kg Vinyllaurat in den Autoklaven gegeben und die Mischung für 20 min gerührt. Zur Stabilisierung der Tröpfchen wurden 1,39 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 71°C erhitzt und dann die Dosierung von 5,62 kg Vinylchlorid bei konstantem Druck gestartet. Die Polymerisation wurde bei einem Druckabfall von 3,5 bar im Vergleich zum Anfangsdruck beendet. Nach der Aufarbeitung der Suspension (Entgasung, Waschung und Trocknung) wurde ein weißes Pulver isoliert.

### Beispiel 3:

In einem 40 L Autoklaven wurden 15,7 kg Wasser und 32,6 g Dilauroylperoxid vorgelegt. Nach der Inertisierung des Autoklaven mit Stickstoff wurden 4,25 kg Vinylchlorid, 2,13 kg Vinylacetat und 2,13 kg Vinyllaurat in den Autoklaven gegeben und die Mischung für 20 min gerührt. Zur Stabilisierung der Tröpfchen wurden 1,39 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 71°C erhitzt und dann die Dosierung von 5,6 kg Vinylchlorid bei konstantem Druck gestartet. Die Polymerisation wurde bei einem Druckabfall von 3,5 bar im Vergleich zum Anfangsdruck beendet. Nach der Aufarbeitung der Suspension (Entgasung, Waschung und Trocknung) wurde ein weißes Pulver isoliert.

### Beispiel 4:

In einem 40 L Autoklaven wurden 15,7 kg Wasser und 28,4 g Dilauroylperoxid vorgelegt. Nach der Inertisierung des Autoklaven mit Stickstoff wurden 5,6 kg Vinylchlorid, 2,1 kg Vinylacetat und 2,1 kg Vinyllaurat in den Autoklaven gegeben und die Mischung für 20 min gerührt. Zur Stabilisierung der Tröpfchen wurden 1,39 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 71°C erhitzt und dann die Dosierung von 4,3 kg Vinylchlorid bei konstantem Druck gestartet. Die Polymerisation wurde bei einem Druckabfall von 3,5 bar im Vergleich zum Anfangsdruck beendet. Nach der Aufarbeitung der Suspension (Entgasung, Waschung und Trocknung) wurde ein weißes Pulver isoliert.

### Beispiel 5:

In einem 40 L Autoklaven wurden 15,7 kg Wasser und 32,6 g Dilauroylperoxid vorgelegt. Nach der Inertisierung des Autoklaven mit Stickstoff wurden 4,25 kg Vinylchlorid, 2,13 kg Vinylacetat und 2,13 kg Vinyllaurat in den Autoklaven gegeben und die Mischung für 20 min gerührt. Zur Stabilisierung der Tröpfchen wurden 1,39 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 71°C erhitzt und dann die Dosierung von 5,6 kg Vinylchlorid bei konstantem Druck gestartet. Die Polymerisation wurde bei einem Druckabfall von 3,3 bar durch Zugabe von 15 g Natriumnitrit beendet. Nach der Aufarbeitung der Suspension (Entgasung, Waschung und Trocknung) wurde ein weißes Pulver isoliert.

### Beispiel 6:

In einem 40 L Autoklaven wurden 15,7 kg Wasser und 32,6 g Dilauroylperoxid vorgelegt. Nach der Inertisierung des Autoklaven mit Stickstoff wurden 3,9 kg Vinylchlorid, 1,1 kg Vinylacetat, 2,1 kg Vinyllaurat und 14,2 g Propanal in den Autoklaven gegeben und die Mischung für 20 min gerührt. Zur Stabilisierung der Tröpfchen wurden 1,39 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 71°C erhitzt und dann die Dosierung eines Gemisches aus 6,0 kg Vinylchlorid und 1,0 kg Vinylacetat bei konstantem Druck gestartet. Die Polymerisation wurde bei einem Druckabfall von 3,5 bar im Vergleich zum Anfangsdruck beendet. Nach der Aufarbeitung der Suspension (Entgasung, Waschung und Trocknung) wurde ein weißes Pulver isoliert.

### Beispiel 7:

In einem 40 L Autoklaven wurden 15,7 kg Wasser und 49,6 g Dilauroylperoxid vorgelegt. Nach der Inertisierung des Autoklaven mit Stickstoff wurden 3,54 kg Vinylchlorid, 2,13 kg Vinylacetat und 2,8 kg Vinyllaurat in den Autoklaven gegeben und die Mischung für 20 min gerührt. Zur Stabilisierung der Tröpfchen wurden 1,39 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 71°C erhitzt und dann die Dosierung von 5,6 kg Vinylchlorid bei konstantem Druck gestartet. Die Polymerisation wurde bei einem Druckabfall von 3,5 bar im Vergleich zum Anfangsdruck beendet. Nach der Aufarbeitung der Suspension (Entgasung, Waschung und Trocknung) wurde ein weißes Pulver isoliert.

### Beispiel 8:

In einem 40 L Autoklaven wurden 20,9 kg Wasser und 4,84 g Kaliumpersulfat vorgelegt. Nach der Inertisierung des Autoklaven mit Stickstoff wurden 1,3 kg Vinylchlorid, 354,4 g Vinylacetat, 708,8 g Vinyllaurat und 6,41 g Natriumdioctylsulfosuccinat in den Autoklaven gegeben und die Mischung für 20 min gerührt. Anschließend wurde das Reaktionsgemisch auf die Polymerisationstemperatur von 70°C erhitzt und dann die Dosierung eines Gemisches aus 6,96 kg Vinylchlorid, 1,42 kg Vinylacetat, 0,92 kg Vinyllaurat und 90,90 g Natriumdioctylsulfosuccinat bei konstantem Druck gestartet. Die Polymerisation wurde bei einem Druckabfall von 1,0 bar im Vergleich zum Anfangsdruck beendet. Nach der Aufarbeitung des Latex (Entgasung, Fällung, Waschung und Trocknung) wurde ein weißes Pulver isoliert.

### Beispiel 9:

In einem 40 L Autoklaven wurden 15,7 kg Wasser, 42,5 g Dilauroylperoxid und 425 g Maleinsäure vorgelegt. Nach der Inertisierung des Autoklaven mit Stickstoff wurden 4,25 kg Vinylchlorid, 2,13 kg Vinylacetat und 2,1 kg Vinyllaurat in den Autoklaven gegeben und die Mischung für 20 min gerührt. Zur Stabilisierung der Tröpfchen wurden 1,39 kg einer 3,05 Gew.-%-igen Hydroxypropylmethylcellulose (HPMC) Lösung in Wasser zugegeben. Anschließend wurde das Reaktionsgemisch auf die Polymerisationstemperatur von 71°C erhitzt und dann die Dosierung von 5,7 kg Vinylchlorid bei konstantem Druck gestartet. Die Polymerisation wurde bei einem Druckabfall von 3,5 bar im Vergleich zum Anfangsdruck beendet. Nach der Aufarbeitung der Suspension (Entgasung, Waschung und Trocknung) wurde ein weißes Pulver isoliert.

### Messmethoden:

Die in Tabelle 1 angegebene Polymerzusammensetzung wurde mittels 1H-NMR-Spektroskopie ermittelt.

### K-Wert:

Der K-Wert ist eine Maßzahl, die mit der viskosimetrischen mittleren Molmasse des Polymerisats korreliert. Der K-Wert wurde mit der Methode gemäß DIN EN ISO 1628-2 bestimmt.

### Glasübergangstemperatur Tg:

Die Glasübergangstemperatur Tg wurde mittels DSC (Dynamische Differenz-Thermoanalyse, DIN EN ISO 11357-1/2) mit dem dynamischen Differenzkalorimeter DSC1 der Firma Mettler-Toledo im offenen Tiegel bei einer Heizrate von 10 K/min bestimmt. Als Glasübergangstemperatur wurde im Wärmeflussdiagramm die Temperatur am Mittelpunkt der Stufe (Mittelpunkt = halbe Stufenhöhe der Stufe des Wärmeflusses) der zweiten Aufheizkurve ausgewertet.

Die Copolymerisate, welche in den Vergleichsbeispielen oder Beispielen erhalten wurden, sind in Tabelle 1 zusammengefasst:

**Tabelle 1:**

| | Polymerzusammensetzung | | | | | |
|---|---|---|---|---|---|---|
| Probe | Anteil VC | Anteil VAC | Anteil VL | Anteil MS | K-Wert | Tg |
| | [Gew%] | [Gew%] | [Gew%] | [Gew%] | | [°C] |
| Vbsp. 1 | 85,0 | 15,0 | | | 50,0 | 70 |
| Vbsp. 2 | 63,0 | 37,0 | | | 50,0 | 60 |
| Bsp. 1 | 69,8 | 24,2 | 6,0 | | 48,5 | 58 |
| Bsp. 2 | 71,4 | 16,3 | 12,3 | | 50,7 | 52 |
| Bsp. 3 | 70,2 | 13,0 | 16,8 | | 50,4 | 46 |
| Bsp. 4 | 69,8 | 12,5 | 17,7 | | 49,7 | 45 |
| Bsp. 5 | 67,9 | 14,0 | 18,1 | | 47,1 | 43 |
| Bsp. 6 | 60,4 | 20,2 | 19,4 | | 48,8 | 41 |
| Bsp. 7 | 64,1 | 14,4 | 21,5 | | 54,6 | 38 |
| Bsp. 8 | 73,4 | 13,8 | 12,8 | | 53,8 | 53 |
| Bsp. 9 | 69,7 | 11,6 | 16,9 | 1,8 | 48,1 | 50 |

### Anwendungstechnische Prüfungen:

Herstellung einer Lacklösung und Bestimmung der Lösungstrübung (Methode A):
In einer 250 ml Glasflasche wurden 120 g Xylol vorgelegt und unter Rühren mit einem Schnellrührer (Dissolver) bei 2000 Umdrehungen pro Minute 30 g des zu lösenden Copolymers langsam zudosiert. Nach 20 Minuten Rührzeit bei 2000 UPM erhitzte man die Lösung unter Rühren bei lediglich 50 Umdrehungen pro Minute für 30 Minuten im Wasserbad auf 50°C und ließ anschließend ohne Rühren auf 23°C abkühlen.
Zur Bewertung der Löslichkeit wurde eine visuelle Klarheits-Bestimmung durchgeführt.

Bewertungsskala der visuellen Klarheits-Bestimmung [Note]:
- 1 =: klar gelöst
- 2 =: fast klar gelöst
- 3 =: leicht trüb
- 4 =: trüb
- 5 =: sehr trüb
- 6 =: unlöslich

Die Ergebnisse der Klarheits-Bestimmung in Xylol sind in Tabelle 2 zusammengefasst.

**Tabelle 2:**

| Probe | V.bsp.1 | V.bsp.2 | Bsp.2 | Bsp.3 | Bsp.4 | Bsp.5 | Bsp.6 | Bsp.7 |
|---|---|---|---|---|---|---|---|---|
| Klarheit | 6 | 6 | 3 | 2 | 4 | 2 | 2 | 1 |

Aus Tabelle 2 geht die verbesserte Löslichkeit der erfindungsgemäßen Polymerisate in Xylol, einem wichtigen Vertreter unpolarer Lösungsmittel, hervor.

Bestimmung der Siegelnahtfestigkeit von Beschichtungen auf Aluminium:
Analog zu Methode A wurde eine 20 Gew.%-ige Lösung hergestellt aus jeweils 6 g des Terpolymers Vinnol^{R} H 15/45 M (carboxylfunktionelles Terpolymer aus 84 Gew.-% VC und 15 Gew.-% VA und 1 Gew.-% ungesättigte Dicarbonsäure; Lackharz der Wacker Chemie AG) und 24 g der Proben aus den Beispielen und Vergleichsbeispielen in 120 g Methylethylketon.

Diese Lösungen wurden jeweils mit einem 24 µm Drahtrakel auf einer Aluminium-Weichfolie (38 µm Dicke) zu einem blasenfreier Film gezogen. Nach 10 Minuten Ablüftzeit bei Raumtemperatur wurde die beschichtete Aluminiumfolie 15 Sekunden bei 180°C im Trockenschrank getrocknet.

Die beschichtete Folie wurde mittig gefaltet, anschließend wurden die jeweils lackierten Seiten der Folie mittels eines Wärmekontakt-Heißsiegelgerät gegeneinander gesiegelt. Siegelbedingungen:
a) Zeit: 0,5 s
b) Temperatur der beiden Siegelbacken (Dimension 15x1 cm):180°C
c) Druck: 30 N/cm²

Aus jeder gesiegelten Folie wurden 5 Streifen (je 1,5 cm breit) geschnitten. Die Siegelnahtfestigkeit wurde mittels eines Zugprüfgerätes bei einem Abzugswinkel von 90° und einer Geschwindigkeit von 100 mm/min gemessen. Aus den jeweils 5 Prüflingen einer Siegelung erfolgte die Mittelwertbildung, der Messwert wurde in N/15mm angegeben.

Die Werte "Siegelnahtfestigkeit Nass" wurden jeweils nach Nasslagerung der gesiegelten Streifen in Wasser über 24 Stunden bei 23°C ermittelt. Je höher die Werte in N / 15 mm umso besser die Siegelnahtfestigkeit

Die Ergebnisse sind in Tabelle 3 zusammengefasst:

**Tabelle 3:**

| Probe | Siegelnahtfestigkeit | Siegelnahtfestigkeit Nass |
|---|---|---|
| | [N/15 mm] | [N/15 mm] |
| Vbsp. 1 | 7,4 | 5,2 |
| Vbsp. 2 | 2,5 | 1,8 |
| Bsp. 1 | 8,6 | 8,7 |
| Bsp. 2 | 10,6 | 6,7 |
| Bsp. 3 | 12,6 | 11,3 |
| Bsp. 4 | 12,9 | 12,4 |
| Bsp. 5 | 8,2 | 8,5 |
| Bsp. 6 | 11,2 | 10,8 |
| Bsp. 7 | 7,9 | 8,4 |

Aus Tabelle 3 wird ersichtlich, dass durch die erfindungsgemäßen Polymerisate die Siegelnahtfestigkeit von Verbundmaterialien (wie etwa beschichtetem Aluminium, beispielsweise für Verpackungen von Lebensmitteln oder Medikamenten) erhöht werden kann. Ebenso wird hierdurch ein Weg aufgezeigt, die Wasserbeständigkeit von Beschichtungen (etwa auf Aluminium) zu erhöhen.

## Patentansprüche

1. Copolymerisate von Vinylchlorid, Vinylacetat und einem oder mehreren langkettigen Vinylestern von unverzweigten oder verzweigten Alkylcarbonsäuren mit 3 bis 18 C-Atomen, **dadurch gekennzeichnet, dass** 35 bis 75 Gew.-% Vinylchlorid-Monomereinheiten, 5 bis 25 Gew.-% Vinylacetat-Monomereinheiten und 10 bis 55 Gew.-% Monomereinheiten von langkettigen Vinylestern enthalten sind, wobei sich die Angaben in Gew.-% auf das Gesamtgewicht der Comonomere beziehen, und sich die Angaben in Gew.-% jeweils auf 100 Gew.-% aufaddieren.

2. Copolymerisate nach Anspruch 1, **dadurch gekennzeichnet, dass** als langkettige Vinylester Vinyllaurat und/oder Vinylester von α-verzweigten Monocarbonsäuren mit 9 bis 10 C-Atomen copolymerisiert werden.

3. Copolymerisate nach Anspruch 1, **dadurch gekennzeichnet, dass** 55 bis 75 Gew.-% Vinylchlorid-Monomereinheiten, 5 bis 25 Gew.-% Vinylacetat-Monomereinheiten und 10 bis 30 Gew.-% Vinyllaurat-Monomereinheiten enthalten sind.

4. Copolymerisate nach Anspruch 1 bis 3, **dadurch gekennzeichnet, dass** noch bis zu 10 Gew.-% funktionelle Comonomere aus der Gruppe enthaltend ethylenisch ungesättigte Mono- und Dicarbonsäuren, Maleinsäureanhydrid, ethylenisch ungesättigte Carbonsäureamide und -nitrile, ethylenisch ungesättigte Sulfonsäuren und deren Salze, epoxidhaltige Comonomere copolymerisiert werden.

5. Verfahren zur Herstellung von Copolymerisaten gemäß Anspruch 1 bis 4 mittels radikalisch initiierter, Polymerisation.

6. Verfahren zur Herstellung gemäß Anspruch 5, **dadurch gekennzeichnet, dass** in wässrigem Medium polymerisiert wird.

7. Verwendung der Copolymerisaten gemäß Anspruch 1 bis 4 als Bindemittel für Lacke und Druckfarben.

8. Verwendung der Copolymerisaten gemäß Anspruch 1 bis 4 als Bindemittel in Beschichtungsmitteln zur Imprägnierung und Beschichtung von Papier, Pappe, Textilien, Vliesstoffen, Metallen, mineralischen Oberflächen, Holz und Kunststoffen.

9. Verwendung der Copolymerisaten gemäß Anspruch 1 bis 4 als Beschichtungsmittel zur Herstellung von heißsiegelfähigen und HF-schweißbaren Filmen.

## Claims

1. Copolymers of vinyl chloride, vinyl acetate and one or more long-chain vinyl esters of unbranched or branched alkylcarboxylic acids having 3 to 18 carbon atoms, **characterized in that** they comprise 35 to 75 wt% of vinyl chloride monomer units, 5 to 25 wt% of vinyl acetate monomer units and 10 to 55 wt% of monomer units of long-chain vinyl esters, the figures in wt% being based on the total weight of the comonomers, and the figures in wt% adding up in each case to 100 wt%.

2. Copolymers according to Claim 1, **characterized in that** long-chain vinyl esters copolymerized comprise vinyl laurate and/or vinyl esters of α-branched monocarboxylic acids having 9 to 10 carbon atoms.

3. Copolymers according to Claim 1, **characterized in that** they comprise 55 to 75 wt% of vinyl chloride monomer units, 5 to 25 wt% of vinyl acetate monomer units and 10 to 30 wt% of vinyl laurate monomer units.

4. Copolymers according to Claim 1 to 3, **characterized in that** additionally up to 10 wt% of functional comonomers are copolymerized from the group containing ethylenically unsaturated monocarboxylic and dicarboxylic acids, maleic anhydride, ethylenically unsaturated carboxamides and carbonitriles, ethylenically unsaturated sulfonic acids and salts thereof, epoxide-containing comonomers.

5. Process for preparing copolymers according to Claim 1 to 4 by radically initiated polymerization.

6. Process for preparing according to Claim 5, **characterized in that** polymerization is carried out in an aqueous medium.

7. Use of the copolymers according to Claim 1 to 4 as binder for paints and printing inks.

8. Use of the copolymers according to Claim 1 to 4 as binder in coating materials for impregnating and coating paper, card, textiles, nonwovens, metals, mineral surfaces, wood, and plastics.

9. Use of the copolymers according to Claim 1 to 4 as coating material for producing heat-sealable and RF-weldable films.

## Revendications

1. Copolymères de chlorure de vinyle, d'acétate de vinyle et d'un ou plusieurs esters de vinyle à longue chaîne d'acides alkylcarboxyliques non ramifiés ou ramifiés comportant 3 à 18 atomes de C, **caractérisés en ce que** 35 à 75 % en poids de motifs monomériques de type chlorure de vinyle, 5 à 25 % en poids de motifs monomériques de type acétate de vinyle et 10 à 55 % en poids de motifs monomériques d'esters de vinyle à longue chaîne sont contenus, les données en % en poids se rapportant au poids total des comonomères, et les données en % en poids s'additionnant à chaque fois jusqu'à 100 % en poids.

2. Copolymères selon la revendication 1, **caractérisés en ce qu'**en tant qu'esters de vinyle à longue chaîne, le laurate de vinyle et/ou des esters de vinyle d'acides monocarboxyliques ramifiés en α comportant 9 ou 10 atomes de C sont copolymérisés.

3. Copolymères selon la revendication 1, **caractérisés en ce que** 55 à 75 % en poids de motifs monomériques de type chlorure de vinyle, 5 à 25 % en poids de motifs monomériques de type acétate de vinyle et 10 à 30 % en poids de motifs monomériques de type laurate de vinyle sont contenus.

4. Copolymères selon les revendications 1 à 3, **caractérisés en ce qu'**encore jusqu'à 10 % en poids de comonomères fonctionnels du groupe contenant des acides monocarboxyliques et dicarboxyliques éthyléniquement insaturés, l'anhydride de l'acide maléique, des amides et des nitriles d'acides carboxyliques éthyléniquement insaturés, des acides sulfoniques éthyléniquement insaturés et leurs sels, des comonomères contenant un époxyde, sont copolymérisés.

5. Procédé pour la préparation de copolymères selon les revendications 1 à 4 au moyen d'une polymérisation initiée de manière radicalaire.

6. Procédé pour la préparation selon la revendication 5, **caractérisé en ce que** l'on polymérise en milieu aqueux.

7. Utilisation des copolymères selon les revendications 1 à 4 en tant que liant pour des laques et des encres d'impression.

8. Utilisation des copolymères selon les revendications 1 à 4 en tant que liant dans des agents de revêtement pour l'imprégnation et le revêtement de papier, de carton, de textiles, de non-tissés, de métaux, de surfaces minérales, de bois et de plastiques.

9. Utilisation des copolymères selon les revendications 1 à 4 en tant qu'agents de revêtement pour la préparation de films thermoscellables et soudables par HF.
